Europäisches Patentamt

(19) European Patent Office

Office européen des brevets

(11) Publication number: **0 164 407**
**B1**

(12) **EUROPEAN PATENT SPECIFICATION**

(45) Date of publication of patent specification: **05.09.90**

(51) Int. Cl.⁵: **H 02 H 3/16**

(21) Application number: **85900365.9**

(22) Date of filing: **05.12.84**

(86) International application number:
**PCT/US84/01978**

(87) International publication number:
**WO 85/02724 20.06.85 Gazette 85/14**

(60) **Divisional application 88113645 filed on 23.08.88.**

(54) SHOCK HAZARD PROTECTION SYSTEM.

(30) Priority: **05.12.83 US 558260**
**05.12.83 US 558262**

(43) Date of publication of application:
**18.12.85 Bulletin 85/51**

(45) Publication of the grant of the patent:
**05.09.90 Bulletin 90/36**

(84) Designated Contracting States:
**BE FR**

(56) References cited:
**EP-A-0 088 390**
**EP-A-0 153 088**
**US-A-3 987 341**
**US-A-4 001 647**
**US-A-4 270 158**
**US-A-4 464 582**

(73) Proprietor: **LEVITON MANUFACTURING COMPANY, INC.**
**59-25 Little Neck Parkway**
**Little Neck, NY 11362 (US)**

(72) Inventor: **GERSHEN, Bernard**
**9 Highland Drive**
**Centerport, NY 11721 (US)**
Inventor: **DOYLE, Richard, Callender**
**203 Stony Hollow Road**
**Greenlawn, NY 11740 (US)**
Inventor: **ROSENBAUM, Saul**
**1464 Tyler Avenue**
**East Meadow, NY 11554 (US)**
Inventor: **PEARSE, James Newberg**
**12 Buckingham Drive**
**Dix Hills, NY 11746 (US)**
Inventor: **RIVERA, Lester**
**70-02 68th Street**
**Glendale, NY 11554 (US)**

(74) Representative: **Lally, William et al**
**FORRESTER & BOEHMERT Widenmayerstrasse 4/I**
**D-8000 München 22 (DE)**

Courier Press, Leamington Spa, England.

EP 0 164 407 B1

## Description

This invention relates generally to electrical hazard prevention, and more specifically to a shock hazard prevention system for disconnecting an electrical load from an electrical source when a shock hazard condition exists within the load.

Devices for protecting human life and property against electrical shock and damage resulting from a shock hazard condition within an electrical load are known. For example, our model No. 6199 ground fault circuit interruptor (GFCI) is capable of sensing and responding to the inadvertent grounding of the neutral conductor of an A-C electrical distribution system. It is noted, however, that in certain applications the utilization of such a GFCI is not practical.

In particular, the GFCI is a relatively expensive and complex device which requires the utilization of several transformers. In addition, the GFCI is often hardwired in a wall outlet or receptacle and is neither portable nor readily disconnected. Thus, unless each outlet in which an electrical device such as, for example, an appliance is to be utilized is protected by a GFCI, the user of the appliance is subject to possible injury if a shock hazard condition should exist in conjunction with a non-protected outlet.

In addition, in certain environments the utilization of a conventional GFCI would not afford any shock hazard protection to the user of an appliance. More specifically, a conventional GFCI device of the type known to applicants will not be effective or work if the user of an electrical appliance drops the appliance in a plastic insulated bathtub.

Another potential drawback, exists regarding the use of a GFCI for certain types of electrical appliances such as, for example, a hair dryer. Although the owner of a hair dryer may have his or her residence outlets adequately protected by GFCI devices, it is possible that other places such as hotels, the residence of relatives, friends, etc., where it is desired to use the hair dryer may not be protected by such devices.

Accordingly, a shock hazard protector is preferably associated with the appliance to be protected itself rather than with the electrical outlet in which the appliance is plugged and energized.

A need exists for a shock hazard protector which has a minimum number of components, reliability, low cost and portability.

Where the appliance is a hand-held appliance connected to an AC source by connecting means including a pair of power conductors and a plug, it has been proposed that an electronic protection circuit responsive to a shock hazard signal should be included within the plug housing itself. Such an arrangement is described, for example, in US Patent 4,270,158 (Gilardoni). In Gilardoni's arrangement the protection circuit responds to a short-circuit across a separate pair of shock-hazard detection wires in the cable carrying first and second power conductors.

The aforementioned problem is solved by the features of claim 1.

Some embodiments of the invention will now be described, by way of example only, with reference to the accompanying drawings wherein:—

Fig. 1 is a perspective-type view of a hair dryer and its associated cord set incorporating a shock hazard protection system;

Fig. 2 is a block diagram of the shock hazard protector according to the invention;

Fig. 3 is a schematic diagram of one embodiment of the shock hazard protector according to the invention;

Fig. 4 is a schematic diagram of a second embodiment of the shock hazard protector according to the invention;

Fig. 5 is an enlarged partial sectional elevational view taken through a cord set plug;

Fig. 6 is a partial fragmentary sectional plan view taken along the line 6—6 of Fig. 5;

Fig. 7 is a schematic circuit diagram of the embodiment of the present invention associated with Figs. 5 and 6;

Fig. 8 is an elevational view of the cord set plug illustrated in Fig. 1 and taken along line 8—8 of that same Fig. 1 depicting the assembled plug with its cover removed;

Fig. 9 is a partial sectional elevational view taken along line 9—9 of Fig. 8;

Fig. 10 is a sectional view taken along line 10—10 of Fig. 8;

Fig. 11 is a fragmentary sectional view taken along line 11—11 of Fig. 8; and

Fig. 12 is an exploded-type perspective view of components of the apparatus illustrated in Fig. 8.

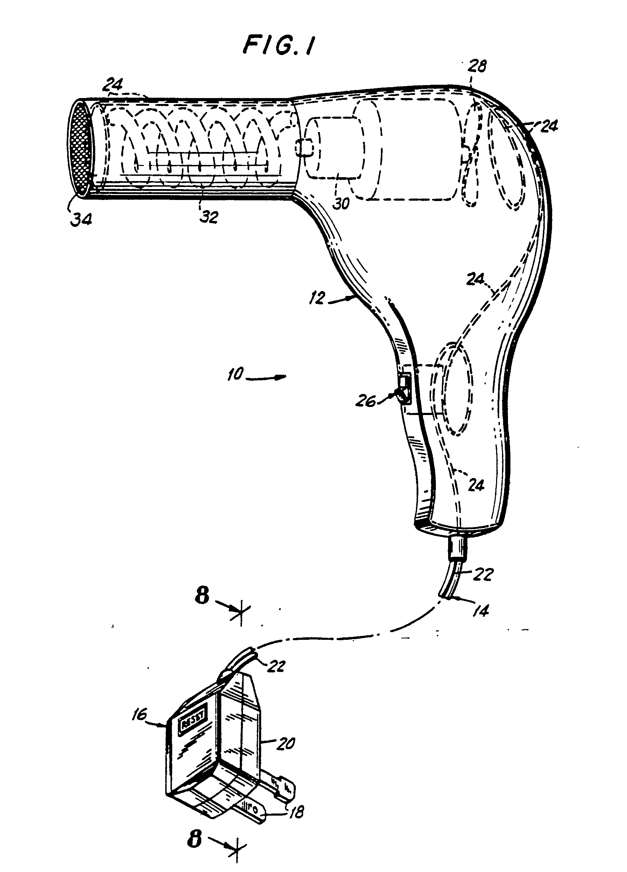

Referring now in more detail to the drawings, Fig. 1 is presented in its form to illustrate a hair dryer 12 and its associated cord set 14 as wholly containing and constituting or comprising a shock hazard protection system 10. The system 10 may be incorporated in an electrical appliance, for example of the personal health care type (hair dryers, etc.), or it may be provided in the form of an OEM product available for sale to manufacturers of such appliances.

A plug assembly 16 is illustrated in Fig. 1 as including polarized blades 18 extending from housing 20. Whereas commercially available hair dryers, as an example of a personal health care appliance, normally include a cord set having two conductors or wires, a third wire 22 is illustrated in the case of cord set 14 electrically communicating with a bare copper wire 24 whose path (in the example given in Fig. 1) includes proximity to and looped circuit near a dryer housing opening through which an on-off switch assembly 26 extends, and thence upward to another loop proximate a dryer housing air inlet opening through which fan 28 driven by motor 30 pulls air to be heated by heating coil 32 before exiting the dryer housing air outlet opening in which grill 34 is positioned. After leaving the second loop described as being adjacent the air inlet opening, wire 22 extends to a third loop adjacent grill 34.

Since heater coil 32 carries and operates on current in the "hot" or phase line, and with the provision of conductor or wire 24 wired as part of the neutral side of the line, the presence of a conductive medium such as, but not limited to, moisture or water between them will create a conductivve path enabling interruption of current to the load 12. This embodiment is distinguishable from another embodiment of the present invention wherein a pair of conductors, as opposed to a single guard or sensing conductor 24, are located at or near moisture/water housing penetration points. Configurations of one or more sensing or guard conductors other than those illustrated herein are contemplated as coming within the scope of this invention.

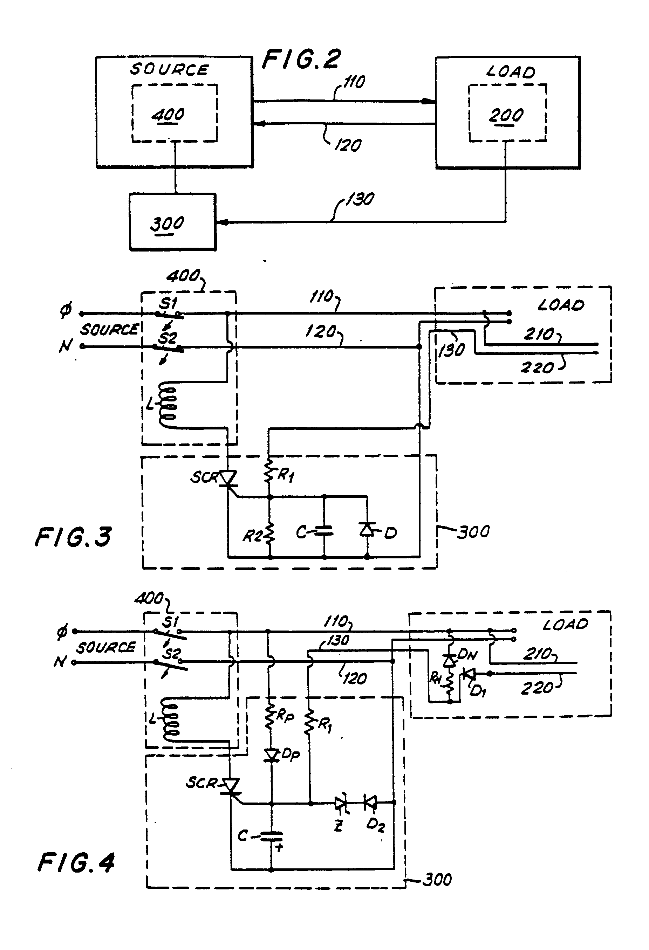

Referring to Fig. 2, a block diagram of a shock hazard protector according to the present invention is illustrated. As shown therein, it comprises a source operatively connected to a load by first and second conductors 110 and 120, respectively, a detector 200 associated with the load, a control circuit 300 connected to the detector by a third conductor 130, and an interruptor circuit 400 associated with the source and connected to the control circuit 300. In the case of an electrical A-C source, conductors 110 and 120 are tied to a phase and the neutral terminal, respectively, of the A-C source.

In the normal mode of operation, that is, in the absence of a hazard condition within the load, the control circuit 300, which changes from a first state to a second state in response to the detection of a hazard condition within the load, remains in the first state. Upon the detection by detector 200 of a predefined fault or hazard condition within the load, the control circuit 300 changes from the first to the second state, which causes the interruptor circuit 400 to operatively disconnect the source from the load.

Referring now to Fig. 3, a schematic diagram of one embodiment of the invention particularly suited for use in conjunction with water-related shock hazard conditions within an electrical appliance operatively connected to an A-C source (not shown) by electrical conductors 110, 120, respectively, is illustrated. As shown therein, detector 200 comprises a pair of hazard or immersion detection conductors 210 and 220, which are positioned in a non-contacting relationship and contained within the electrical load. A pair of immersion detection conductors 210 and 220 are preferably located in proximity to each port of the appliance to be protected where water can enter.

For ease of description, it will be assumed that the appliance to be protected only contains one port or opening through which water may enter. For this situation, one end of one of the pair of immersion detection conductors 210 is operatively connected to the phase terminal of an A-C source (not shown) via electrical conductor 110, and one end of the second of the pair of immersion detection conductors 220 is connected to the load end of the third electrical conductor 130. The other ends of immersion detection conductors 210, 220 are unconnected and are maintained in a spaced-apart relationship, typically for example, not more than one inch.

Shock hazard or immersion detection conductors 210, 220 may comprise, for example, a pair of bare electrical conductors or a pair of conducting plated lines on a printed circuit board or other physical configurations that will enable a conductive path between the unconnected ends thereof.

Control circuit 300 comprises a solid state switching control circuit and includes a first resistor R1 connected in-line between the gate of a silicon controlled rectifier SCR and the source end of the third electrical conductor 130. Resistor R1 limits the current applied to the gate of the SCR. In addition, control circuit 300 includes a parallel network comprising resistor R2, capacitor C and diode D connected between the gate and cathode of the SCR. These components provide a measure of noise immunity and protection against damage across the gate to cathode junction of the SCR.

Interruptor circuit 400 comprises an electromechanical interrupting circuit and includes an energizing coil L and a first and second contact or switch S1, S2 connected in-line with the first and second electrical conductors 110, 120 respectively. Switches S1 and S2 are responsive to the flow of current through energizing coil L and are closed when such current is not flowing. In response to the flow of such current they switch from the normally closed position to the shock hazard condition open position. One end of energizing coil L is connected to the first electrical conductor 110 and the other end thereof is connected to the anode of the SCR. The cathode of the SCR is operatively connected to the second electrical conductor 120.

The existence of a water related shock hazard condition within the electrical appliance is detected when both unconnected ends of the pair of immersion detection conductors 210, 220 are immersed in the water. More specifically, the immersion of both unconnected ends of the pair of immersion detection conductors 210, 220 causes the electrical A-C source to be operatively connected to the gate of the SCR via the path provided by the first electrical conductor 110, the first immersion detection conductor 210, the electrically conducting path provided by the water in which the unconnected ends of the first and second immersion detection conductors 210, 220 are immersed, the second immersion detection conductor 220, the third electrical conductor 130, and resistor R1. In response thereto, the SCR switches from the normally non-conducting state to the shock hazard condition conducting state, thereby providing a path for current to flow through the energizing coil L causing switches S1 and S2 to switch from the normally closed position to the shock hazard condition open position and thus operatively disconnecting the electrical A-C source from the electrical appliance.

To insure that the shock hazard protector is operable prior to utilization of the appliance it protects, a test circuit (not shown) comprising, for example, a resistor in series with a normally open switch connected between the pairs of immersion conduction detectors 210, 220 may be utilized. Closing the normally open switch causes the resistor to be connected across the immersion detectors and, if the shock hazard protector is operating, as described above, causes the A-C source to be operatively disconnected from the appliance. Preferably, the test circuit is contained within the electrical appliance. In conjunction with said test circuit, diode D could be replaced wit a light-emitting-diode (LED). If the LED is illuminated with the test switch in the closed position it indicates that the shock hazard protector is not operating properly.

Preferably, electrical conductors 110, 120 and 130 comprise a three wire conductor having an A-C source compatible plug at the source end, the control circuit 300 and interruptor circuit 400 are contained in the plug, and the detector 200 is contained within the appliance.

Thus in the case where the electrical appliance 12, is, for example, a hair dryer, the detector 200 would be located internally within the dryer and, as noted above, in proximity to each port thereof where water can enter the dryer. It should be emphasized here that while water is given as the electrically conductive medium, this invention contemplates a response to any electrically conducting medium, such that the appliance is electrically disconnected from the A-C source in response to the presence of such a conductive medium.

Exemplary values for the circuit illustrated in Figure 3 are as follows: $R_1$-2000 ohms, $R_2$-1000 ohms, C-0.1 microfarads, D-1N4004, SCR-2N5064.

Referring now to Figure 4, a schematic diagram of a second embodiment of the present invention particularly suited for use in conjunction with water-related shock hazard conditions within an electrical appliance is illustrated. This embodiment provides an additional feature not present in the first embodiment illustrated in Figure 3. In particular, the embodiment illustrated in Figure 3, provides shock hazard protection if any of electrical conductors 110, 120, individually or in combination, are broken, but does not provide shock hazard protection if electrical conductor 130 is broken. The embodiment illustrated in Figure 4 provides an additional measure of shock hazard protection by rendering the electrical appliance inoperative if any of electrical conductors 110, 120 and 130, individually or in combination, are broken.

This additional measure of protection is provided by the addition of a first diode $D_1$ connected in series between the second immersion detection conductor 220 and the third electrical conductor 130, the replacement of the capacitor connected between the gate and cathode of the SCR with an appropriate charging capacitor, the addition of a first charging circuit comprising resistor $R_N$ and diode $D_N$ connected between the first and third electrical conductors 110, 130, the addition of a zener diode in series with the diode connected between the gate and cathode of the SCR, the addition of a second charging circuit comprising resistor Rp and diode Dp connected between the first electrical conductor 110 and the gate of the SCR, and the elimination of resistor $R_2$ connected between the gate and cathode of the SCR.

The operation of the circuit illustrated in Figure 4 is as follows. Assuming that the sensing or third conductor 130, is intact, the appliance is not immersed in water and that it is energized, during the negative half cycle of the A-C signal on electrical conductor 110 a negative charging path via diode $D_N$, resistor $R_N$, third conductor 130, resistor $R_1$ provides charge to capacitor C, thereby charging it negatively. During the positive half cycle diode $D_N$ blocks, however a positive charging path via resistor $R_P$ and diode $D_P$ provides charge to capacitor C, thereby charging it positively. Since the time constant of resistor $R_N$ and capacitor C, is roughly 33 times greater than the time constant of resistor $R_P$ and capacitor C, the capacitor C charges much faster in the negative sense, so that under steady state conditions a negative voltage exists on the gate of the SCR thereby keeping it in a non-conducting state. In order to limit that negative voltage to a value that would not damage the gate to cathode junction of the SCR a three volt zener diode is added in series with diode $D_2$, also in parallel with capacitor C.

The next condition to look at is a broken third conductor 130. Under this condition a negative charging path no longer exists for the negative voltage to be impressed on capacitor C, and, therefore during positive half cycles capacitor C will discharge positively and eventually the voltage on the gate of the SCR will get high enough to trip the SCR, causing it to switch to the conducting state thereby operatively disconnecting the A-C source from the appliance, putting you in a safe condition. Exemplary values for the circuit illustrated in Figure 4 are as follows: $D_1$, $D_2$, $D_N$, $D_P$-1N4004, $R_N$-30,000 ohms, $R_P$-1,000,000 ohms, $R_1$-2000 ohms, C-1 microfarad, SCR-2N5064, Z-3 volt zener diode.

Preferably, the components comprising the first charging circuit $R_N$, $D_N$ and diode $D_1$ are contained within the electrical appliance and are waterproof, the components comprising the second charging circuit $R_P$, $D_P$ and the zener diode Z are contained in the plug.

It is noted that with minor modifications the above described shock hazard protector has many other applications. For example, in the situation where the electrical appliance comprises a power tool, such as a drill, having an electrically conductive housing, the immersion detection conductor 220 can be omitted and the third electrical conductor 130 connected instead to the electrically conductive housing. The immersion in water of the unconnected end of shock hazard detection conductor 210 provides an electrically conductive path between the shock hazard detection conductor and the electrically conductive housing of the drill causing, as described above, the drill to be operatively disconnected from the A-C source.

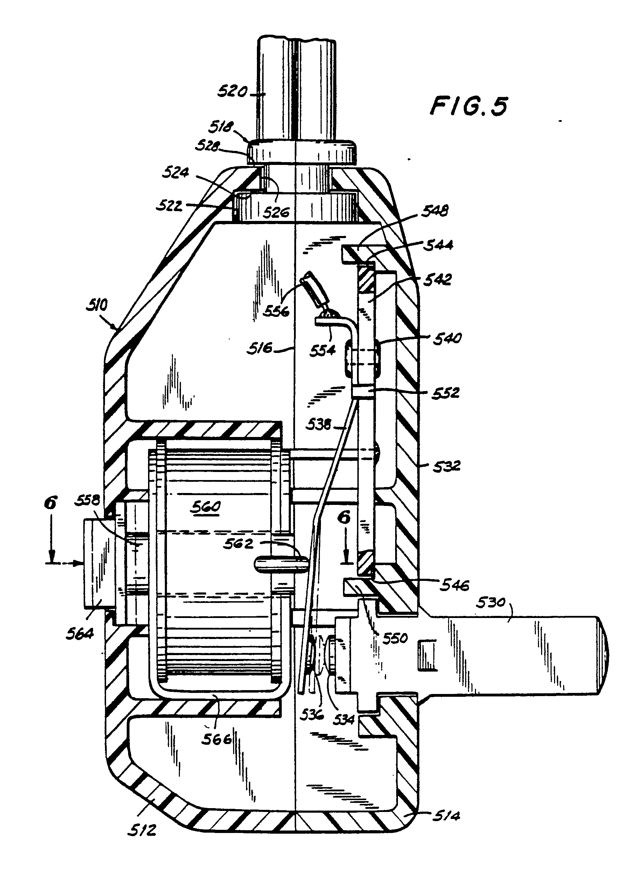

Referring now to an embodiment which uses a relay mechanism to accomplish circuit interruption, Fig. 5 illustrates a shock hazard protector embodiment of a plug assembly 510 formed with a housing with a base and cover body halves 512 and 514, respectively, joined at a housing reference line 516. A strain relief 518 comprises part of cord 520 and, in cooperative combination with the shape and contour of annular surfaces 522, 524, 526 and 528, serves as a means for protecting the integrity of electrical connections during use.

Blades 530 extend outwardly from surface 532 of housing half 512 and serve the function of matingly and electrically engaging electrical contacts within a receptacle (not shown) or electrical outlet in the home, for example. A fixed contact 534 is associated and integral with each of the blades 530, contacts 534 being fixed or stationary as opposed to movable when assembled.

A pair of movable contacts 536 are provided and are integral with leaf springs 538 which, in turn, are anchored by means of eyelets 540 extending through openings in an end portion of the leaf springs 538 spaced from the movable contacts 536. These eyelets further extend through openings through a printed circuit board 542 supported by ledges 544 and 546 adjacent upstanding walls 548 and 550, as shown in Fig. 5.

A tab 552 associated with each leaf spring 538 further anchors the leaf springs to the printed circuit board in spaced relationship with respect to the aforesaid eyelets, thereby serving an additional function of preventing undesirable rotation of the leaf springs 538, assuring alignment and reliably repeated engagement between the fixed and movable contacts 534 and 536, respectively. Leaf springs 538 are configured to normally bias the movable contacts 536 away from the fixed contacts 534 when in an unstressed condition, thereby normally interrupting an electrical path between these contacts. The ends of leaf springs 538 are formed with upstanding flanges 554 to which conductors 556 are connected.

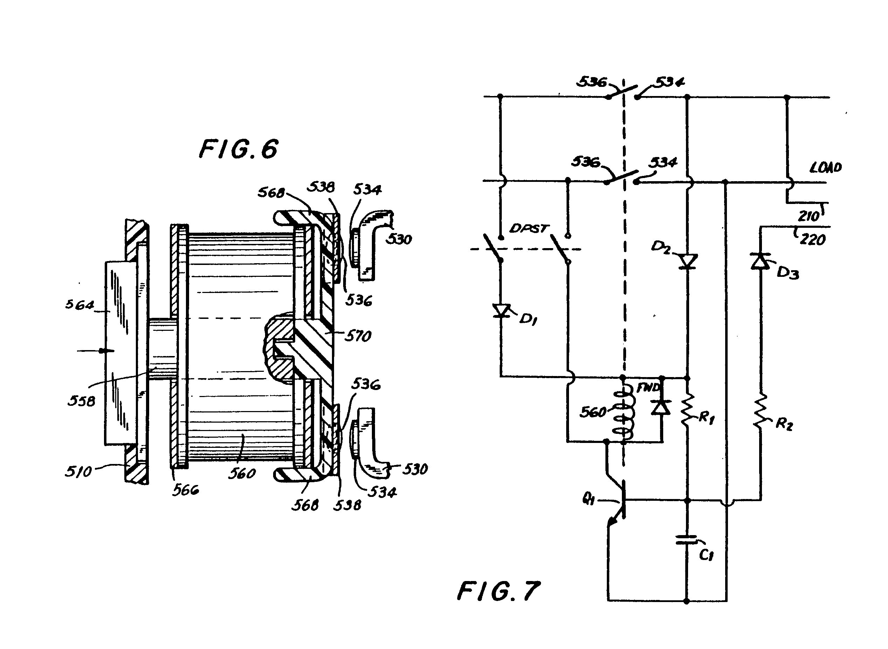

A plunger or core 558 is disposed vertically within a bobbin coil 560, as illustrated in Fig. 5. A reset button 564 contacts the uppermost portions of plunger 558, while a butterfly cross bar 562 extends laterally across the plug housing and in contact with upper surfaces of leaf springs 538. The upward biasing forces of leaf springs 538 maintain the cross bar 562, plunger 558 and reset button 564 in the positions shown in Fig. 5, while a metal strap 566 extends about portions of coil 560 as shown. The cross sectional shape of reset button 564 is polygonal, such as square, to prevent rotation thereof, while the cross sectional shape of core or plunger 558 is round to provide maximum electromagnetic efficiency in its interaction with bobbin coil 560. Fig. 6 illustrates in a cross sectional view what applicants refer to as the "butterfly" with arms 568 being splayed outwardly from a center rivet member 570 aligned with plunger 558.

In operation, power for the printed circuit board electronic components is supplied by a copper path on the board via pins extending downwardly from the bobbin coil 560. Prior to a shock hazard predetermined condition, the system of Fig. 5 is "set" by means of depressing set or reset button 564 inwardly, which results in movement of the plunger and the cross bar against the opposing biasing forces of leaf springs 538. This depression of the set or reset button will result in movement of the leaf springs until the movable contacts engage the fixed contacts, thereby completing an electrical circuit.

The completion of the electrical circuit just described results in current flow to the bobbin coil which, in turn, electromagnetically "keeps" and holds the plunger in its depressed position until an interruption of such current flow. The interengagement of the movable and fixed contacts further serves to enable the supply of power to the load or appliance with which the inventive assembly of Fig. 5 is associated, again, until an interruption in current flow to the bobbin coil.

In the event of the presence of a shock hazard condition, as a result of the operation of circuitry of Fig. 7 described in detail below, current to the bobbin coil is interrupted, with the result that the upward biasing forces of leaf springs 538 rapidly cause a separation of the movable contacts away from the fixed contacts, thereby in turn causing an interruption of power from the source through the blades to the load or appliance.

Referring now to Fig. 7 of the drawings, the aforesaid circuitry associated with the device of Fig. 5 is illustrated with like components in Figs. 5 and 7 carrying like reference characters. With the relay of Fig. 5 being fed with half wave rectified alternating current, or pulsating direct current, there is some current flow during the negative half cycle or the half cycle other than that when line current is flowing. A free wheeling diode FWD continues current flow.

The main contacts are normally open. When it is desired to turn on the appliance after plugging it into a receptacle power source, pushing a momentary switch (DPST) applies half wave rectified direct current to the bobbin coil. This results in applying a voltage from the phase line through the double pole single throw switch DPST, through a diode $D_1$, thence through the bobbin coil, with the other end of the coil going through another contact of the double pole switch to neutral. Thus, by pushing the switch or reset button, the coil is energized, and the main contact is closed.

Once the main contact is closed, a parallel path for the current is provided through another diode $D_2$, such that there is current flow from phase through diode $D_2$ through the coil with its free wheeling diode in parallel with it, thence through the collector of a transistor $Q_1$, the emitter of the transistor $Q_1$ being connected to neutral. The transistor is kept on by a resistor going from phase to the base. $R_1$ is the resistor between phase and the base.

Once the coil energizes itself as described, the transistor is turned on and then the momentary contact in the DPST is released and the coil is self-holding. Should the load or appliance be dropped into water, creating a shock hazard condition, the current in a sense line is rectified by diode $D_3$ and a resistor $R_2$ puts a negative voltage onto the base of the transistor. A capacitor $C_1$ is provided between the transistor base and the emitter which will essentially store whatever voltage was present to smooth it out. By setting the value of $R_2$ relatively small with respect to the value of $R_1$, the time constant of the negative current is shorter than that of the positive current and in this way there is a negative charge turning off the transistor with the result that the movable contacts separate from the fixed contacts (Fig. 5).

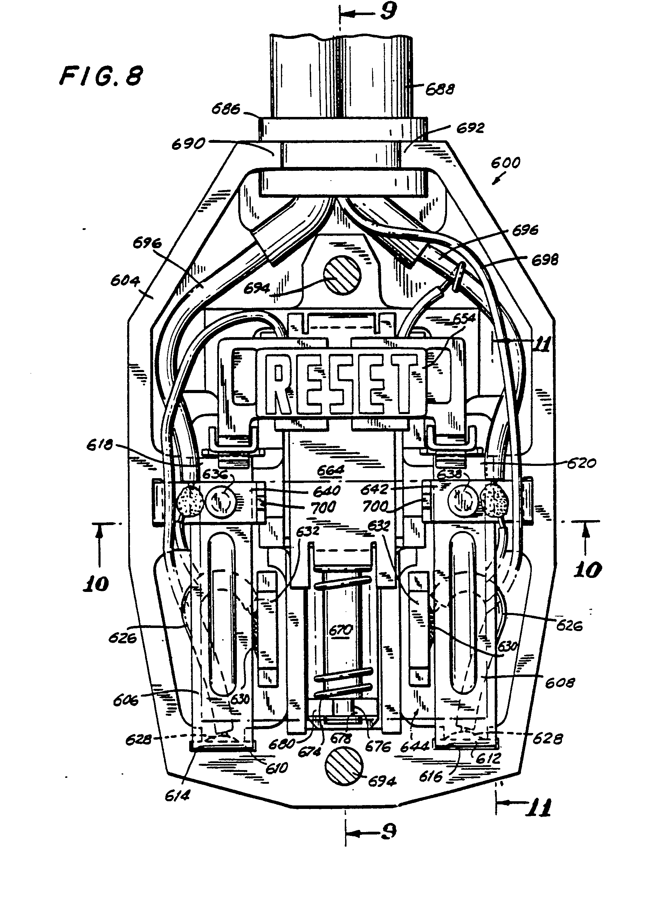

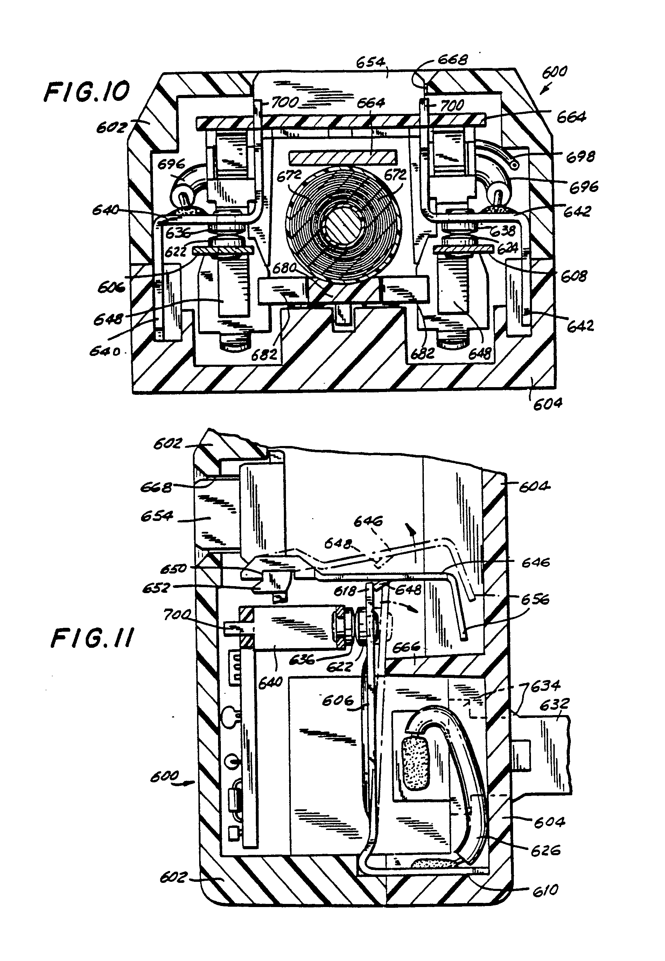

Referring now to another embodiment illustrated in Figs. 8—12, wherein a novel electromechanical and electromagnetic combination serves a circuit interrupting or breaking function, as well as other functions. In Fig. 8 a plug assembly 600 of the type designated by reference character 16 in Fig. 1 is shown with cover housing half 602 removed to illustrate base housing half 604 with its assembled subassemblies in place. A pair of movable contact arms 606 and 608 are each anchored at their respective angled depending legs 610 and 612 within slots or recesses 614 and 616 of base housing half 604. Near ends 618 and 620 of movable arms 606 and 608, respectively, remote from their ends 610 and 612, silver contacts 622 and 624 are riveted to its arm.

Flexible conductors 626 are welded at 628 to depending legs 610 and 612 at one of their ends, and at their other ends 630 the flexible conductors are welded to plug insertion blades 632. Blades 632 are configured with mounting shoulders 634 so as to be held relatively integral with base 604 when assembled.

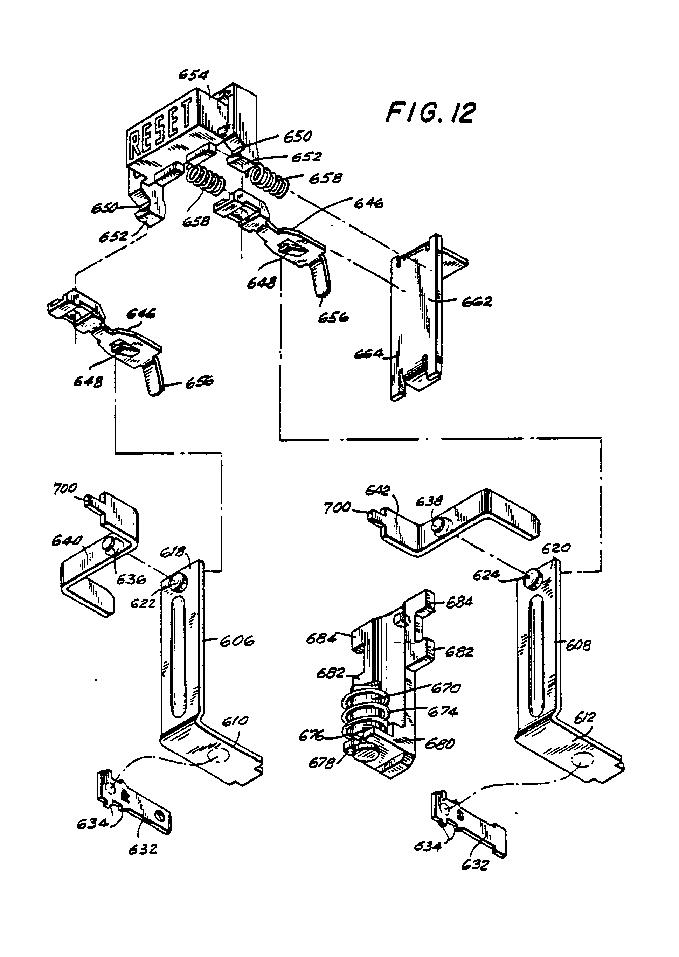

Movable contact arms 606 and 608 are normally biased in the direction shown in phantom lines within Fig. 11 such that they bias the silver contacts 622 and 624 away from fixed silver contacts 636 and 638 which are riveted to fixed contact terminals 640 and 642, respectively. The fixed contact terminals 640 and 642 themselves are physically and electrically connected to a printed circuit board 644 which carries one of the electrical circuit embodiments described above.

A latch member 646 formed with a tang 648 is associated with each movable contact arm and each is mounted and pivoted at its upper end on pivot points 650 formed on legs 652 of a set/reset button 654. At their lower ends 656, latches 646 are formed with downward bend or leg, as viewed in Fig. 11, these latter legs giving the latches structural stability for added reliability. The full lines of Fig. 11 illustrate latches 646 in their latched or set position, with tangs 648 holding the ends of movable contact arms 606 and 608 such that movable silver contacts 622 and 624 are in physical and electrical engagement with fixed silver contacts 636 and 638, thereby enabling current flow through blades 632 from a source such as an electrical receptacle to a load, such as hair dryer 12.

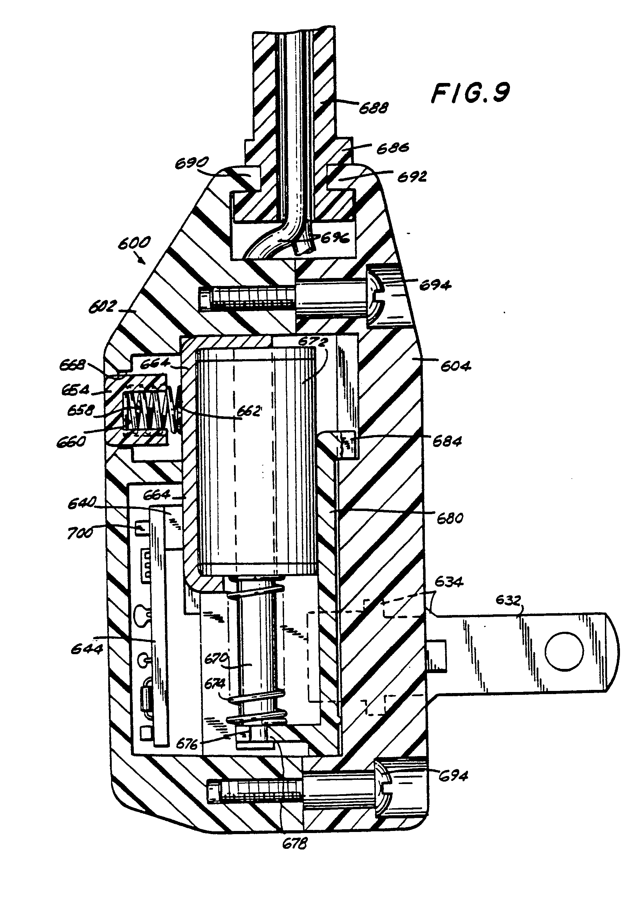

Reset button 654 is normally biased in a direction away from blades 632 by means of helical compression springs 658 shown in Figs. 9 and 12, for example. Springs 658 are held captive between and exert forces against opposing surfaces 660 and 662 of the underside of the reset button 654 and a metallic frame 664 (see Fig. 9). Set/reset button 654 is visible to the user through a window 668 formed within cover housing half 602 and preferably carries indicia of the type illustrated in Fig. 8 to draw attention to its function.

When the movable contact arms 606 and 608 are in the positions shown in Fig. 11 in phantom outline, resting against a wall 666 formed in base housing half 604, such that the electrical circuit is in an interrupted state with the movable and fixed contacts spaced in opposition with respect to one another, the user is able to close the circuit, assuming no hazard condition is present, by depressing with his or her finger the set/reset button 654. This depression of the button 654 causes latches 646 to move in the same direction as the movable button 654 and in sliding engagement with the ends of the movable contact arms 606 and 608 until and such that tangs 648 ride over these arm ends. Release of the formerly depressed button 654 results in its only partially returning under the influence of springs 658 towards its original position, with a resulting pulling of the movable contacts 622 and 624 into engagement with their respective opposing contacts 636 and 638 by latch tangs 648 against the undersides of the movable arm ends, thereby setting the system and closing the circuit. Latches 646 and their tangs 648 hold the movable contacts in the last position just described until a hazarrd condition is sensed or detected. In such an event, a plunger 670 shown in Figs. 8 and 9 as being normally biased away from its associated winding or coil 672 by means of a helical compression spring 674 is cuased to rapidly approach the core of coil 672 as a result of its being energized. Plunger 670 is formed with a neck 676 adjacent its end remote from coil 672, with which a clevis 678 of what will here be referred to as a banger 680 matingly engages. Banger 680 is further formed with pairs of trip and reset dogs 682 and 684 movable paths that coincide with latch 646. Upon energization of coil 672, trip dogs 682 rapidly come into contact with and "bang" against the surfaces of latches 646 facing wall 666, forcibly disengaging the latches 646 and their tangs 648 from the movable contact arms; with the result that these arms return to their rest positions against wall 666, and interrupt current flow through the movable and fixed contacts. Once the current is interrupted, the compression forces within spring 674 cause the plunger 670 and its interconnected banger 680 to return to the position illustrated in Fig. 9, with the reset dogs 684 coming into contact with and biasing the latches 646 against the ends of the movable contact arms 606 and 608.

Frame 664 comprises part of the magnetic circuit associated with an operating winding or coil 672, and for that purpose encloses a portion of the coil. A strain relief 686 formed in the insulation of a cord set 688 is shown in Figs. 8 and 9 held between opposing annular walls 690 and 692, respectively, of housing halves 602 and 604 which, in turn, are releasably secured together by means of fasteners 694. Cord set 688 corresponds to the cord set 14 illustrated in Fig. 1.

Fig. 8 illustrates the printed circuit board 644 in broken-line outline in the position it occupies atop the banger assembly and the fixed contacts. Fig. 8 further illustrates the three wires, phase/neutral 696 and the guard or sensing wire 698 which extend through and as part of cord set 688, through the strain relief 686, and into the confines of plug assembly 600. Sensing wire 698 corresponds to the third wire 22 of Fig. 1 which electrically communicates with a sensing wire in the load, such as sensing wire 24 of Fig. 1, and wire 698 is coupled to the PC board 644 while the phase and neutral lines are electrically secured to the fixed contact terminals 640 and 642. Terminals 640 and 642 are soft soldered to the PC board 644 by means of mounting tabs 700.

The present invention thus provides the user with a shock hazard protection system which: has a response time that conforms to Underwriters Laboratories requirements; is trip free; possesses a double pole interrupting mechanism with an air gap switch; operates with reverse polarity; requires only a 2 pole receptacle; operates in an ungrounded environment, such as a plastic tub; is of a reasonable size and cost; provides the user with a visible trip indication; meets Underwriters Laboratories overload, short circuit, and endurance requirements; possesses electrical noise immunity so as to minimize false tripping; provides protection in the event the cord is broken, with proper polarity assumed; provides adequate strain relief; is usable with a combination switch/receptacle; and provides protection whether the load or appliance switches are on or off, or are at medium or high settings.

## Claims

1. Electrical apparatus wherein a hand-held electrical appliance (12) is adapted for connection to an AC source by connecting means (14) including first (110) and second (120) power conductors and a plug (16); and shock hazard prevention means (10) comprising: a pair of shock hazard detection conductors (210, 220) contained within the appliance (12) for detecting a water-related shock hazard condition within the appliance, the conductors (210, 220) having respective unconnected ends maintained in a spaced apart relationship; control means (300) contained within the plug (16) and changing from a first state to a second state in response to the detection of a water-related shock hazard condition within the appliance (12), and switching means (S1, S2) contained within the plug (16) and responsive to current flow through an actuator (L) for operatively disconnecting the AC source from the appliance (12) in response to the changing of the control means (300) from its first state to its second state, characterised in that a first (210) of the detection conductors (210, 220) is connected to the first power conductor (110), the second detection conductor (220) is connected to a third electrical conductor (130) in the connecting means (14) and the control means (300) comprises a gated electronic switching device (SCR) connected across the first and second power conductors (110, 120) in series with the actuator (L) for the switching means (S1, S2), the third electrical conductor (130) being connected to the gate of the electronic switching device (SCR) whereby immersion in water of the unconnected ends of the detection conductors (210, 220) provides an electrically conductive path between the detection conductors to connect the second power conductor to the gate of the electronic switching device (SCR), the resulting switching of the device (SCR) from a normally non-conducting state to a shock hazard condition conducting state providing a path for current to flow through the actuator (L) such that the switching means (S1, S2) are opened to disconnect the AC source from the appliance.

2. Apparatus according to Claim 1 in which the actuator comprises an energising coil (L) and the switching means comprises first and second switches (S1, S2) responsive to the flow of current through the energising coil (L), the first switch (S1) being operable between a normally closed position and a shock hazard open position and being connected in-line with the first power conductor (110), and the second switch (S2) being operable between a normally closed position and a shock hazard open position and being connected in-line with the second power conductor (120).

3. Apparatus according to Claim 2 in which the electronic switching device comprises a silicon controlled rectifier (SCR), and in which a first resistor (R1) is connected in series between the gate of the silicon controlled rectifier (SCR) and the third electrical conductor (130), the cathode of the silicon controlled rectifier (SCR) being connected to the second power conductor (120), the anode of the silicon controlled rectifier (SCR) being connected to one end of the energising coil (L), and the other end of the energising coil (L) being connected to the first power conductor (110).

4. Apparatus according to Claim 3 further comprising a diode circuit (D) connected between the gate and cathode of the silicon controlled rectifier.

5. Apparatus according to Claim 4 further comprising: a charging capacitor (C) connected between the gate and cathode of the silicon controlled rectifier (SCR); a first charging circuit $(R_N, D_N)$ connected between the first electrical conductor (110) and the third electrical conductor (130); a second charging circuit ($R_P$, $D_P$) connected between the first power conductor (110) and the gate of the silicon controlled rectifier (SCR); and a first diode ($D_1$) connected in series between the second shock hazard detection conductor (220) and the third electrical conductor (130).

6. Apparatus according to Claim 5 wherein the diode circuit comprises a zener diode (Z) connected in series with a second diode ($D_2$), the anode of the zener diode (Z) being operatively connected to the gate of the silicon controlled rectifier (SCR), and the anode of the second diode ($D_2$) being operatively connected to the cathode of the silicon controlled rectifier (SCR).

7. Apparatus according to Claim 6 wherein the first charging circuit comprises a first charging resistor ($R_N$) connected in series with a first charging diode ($D_N$), the cathode of the first charging diode ($D_N$) being operatively connected to the first power conductor (110); and the second charging circuit comprises a second charging resistor ($R_P$) connected in series with a second charging diode ($D_P$), the cathode of the second charging diode ($D_P$) being operatively connected to the gate of the silicon controlled rectifier (SCR).

8. Apparatus according to Claim 5 wherein the first charging circuit and the first diode are contained within the electrical appliance.

9. Apparatus according to any one of the preceding claims wherein the electrical appliance is a hair dryer.

10. Apparatus according to any one of the preceding claims further including a test circuit operatively connected between the first and second shock hazard detection conductors and comprising a resistor in series with a normally open switch.

11. Apparatus according to Claim 6 wherein the second diode ($D_2$) comprises a light-emitting diode.

12. Apparatus according to any one of the preceding claims in which one of the shock hazard detection conductors comprises an electrically conductive housing for the said appliance.

13. Apparatus according to Claim 12 wherein the electrical appliance is a power tool.

14. Apparatus according to Claim 7 in which the value of the second charging resistor ($R_P$) is at least 10 times the value of the first charging resistor ($R_N$).

15. Apparatus according to Claim 9 in which one of the shock hazard detection conductors comprises a heating element of the hair dryer.

**Patentansprüche**

1. Elektrische Vorrichtung, bei der ein in der Hand gehaltenes elektrisches Gerät (12) dazu ausgelegt ist, mit einer Wechselspannungsquelle mittels Verbindungsmitteln (14) verbunden zu werden, welche erste (110) und zweite (120) Stromleiter und einen Stecker (16) umfassen; und bei der Mittel (10) zum Unterbinden der Schockgefahr umfassen: ein Paar Schockgefahr-Erfassungsleiter (210, 220) innerhalb des Gerätes (12) zum Erfassen einer Schockgefahr in dem Gerät durch Wasser, wobei die Leiter (210, 220) jeweils freie Enden haben, die mit Abstand voneinander gehalten sind; Überwachungsmittel (300) in dem Stecker (16), die von einem ersten in einen zweiten Zustand wechseln, wenn eine Schockgefahr wegen Wassers innerhalb des Gerätes (12) erfaßt wird, und Schaltmittel (S1, S2) innerhalb des Steckers (16), die auf einen Stromfluß durch einen Schalter (L) damit reagieren, daß sie die Wechselspannungsquelle von dem Gerät (12) trennen, und zwar auf den Wechsel der Überwachungsmittel (300) von deren ersten in deren zweiten Zustand hin, dadurch gekennzeichnet, daß ein erster (210) der Erfassungsleiter (210, 220) mit dem ersten Stromleiter (110) verbunden ist, der zweite Erfassungsleiter (220) mit einem dritten Stromleiter (130) in den Anschlußmitteln (14) verbunden ist und die Überwachungsmittel (300) eine torgesteuerte elektronische Schalteinrichtung (SCR) umfassen, die in Serie mit dem Schalter (L) für die Schaltmittel (S1, S2) zwischen den ersten und den zweiten Stromleiter (110, 120) geschaltet ist, wobei der dritte elektrische Leiter (130) mit dem Tor der elektronischen Schalteinrichtung (SCR) verbunden ist, wodurch ein Eintauchen der freien Enden der Erfassungsleiter (210, 220) in Wasser einen elektrisch leitenden Pfad zwischen den Erfassungsleitern erzeugt und so der zweite Stromleiter mit dem Tor der elektrischen Schalteinrichtung (SCR) verbunden ist, wobei das resultierende Umschalten der Einrichtung (SCR) von einem normalen nicht-leitenden Zustand in einen Schockgefahr-Leitungszustand einen Pfad bildet, so daß Strom durch den Schalter (L) derart fließt, daß die Schaltmittel (S1, S2) geöffnet werden, um die Wechselspannungsquelle von dem Gerät abzuklemmen.

2. Vorrichtung nach Anspruch 1, wobei der Schalter eine Erregerspule (L) und die Schaltmittel einen ersten und einen zweiten Schalter (S1, S2) umfassen, welche auf den Stromfluß durch die Erregerspule (L) reagieren, wobei der erste Schalter (S1) zwischen einer geschlossenen Normal-Position und einer offenen Schockgefar-Position hin- und herschaltbar und in den ersten Stromleiter (110) eingesetzt ist und wobei der zweite Schalter (S2) zwischen einer geschlossenen Normal-Position und einer geöffneten Schockgefahr-Position hin- und herschaltbar und in den zweiten Stromleiter (120) eingesetzt ist.

3. Vorrichtung nach Anspruch 2, wobei die elektronische Schalteinrichtung einen siliziumgesteuerten Gleichrichter (SCR) umfaßt und wobei ein erster Widerstand (R1) in Serie zwischen das Tor des siliziumgesteuerten Gleichrichters (SCR) und den dritten elektrischen Leiter (130) geschaltet ist, wobei die Kathode des siliziumgesteuerten Gleichrichters (SCR) an den zweiten Stromleiter (120), die Anode des siliziumgesteuerten Gleichrichters (SCR) an ein Ende der Erregerspule (L) und das andere Ende der Erregerspule (L) an den ersten Stromleiter (110) angeschlossen sind.

4. Vorrichtung nach Anspruch 3, die ferner eine Diodenschaltung (D) umfaßt, die zwischen das Tor und die Kathode des siliziumgesteuerten Gleichrichters geschaltet ist.

5. Vorrichtung nach Anspruch 4, die ferner umfaßt: einen Ladekondensator (C), der zwischen das Tor und die Kathode des siliziumgesteuerten Gleichrichters (SCR) geschaltet ist; eine erste Ladeschaltung ($R_N$, $D_N$), die zwischen den ersten elektrischen Leiter (110) und den dritten elektrischen Leiter (130) geschaltet ist; eine zweite Ladeschaltung ($R_P$, $D_P$), die zwischen den ersten Stromleiter (110) und das Tor des siliziumgesteuerten Gleichrichters (SCR) geschaltet ist; und eine erste Diode ($D_1$), die in Serie zwischen den zweiten Schockgefahr-Erfassungsleiter (220) und den dritten elektrischen Leiter (130) geschaltet ist.

6. Vorrichtung nach Anspruch 5, wobei die Diodenschaltung eine Zenerdiode (Z) umfaßt, die in Serie mit einer zweiten Diode ($D_2$) verschaltet ist, wobei die Anode der Zenerdiode (Z) betriebsmäßig mit dem Tor des siliziumgesteuerten Gleichrichters (SCR) verbunden ist und die Anode der zweiten Diode ($D_2$) betriebsmäßig mit der Kathode des Siliziumgesteuerten Gleichrichters (SCR) verbunden ist.

7. Vorrichtung nach Anspruch 6, wobei die erste Ladeschaltung einen ersten Ladewiderstand ($R_N$) umfaßt, der in Serie mit einer ersten Ladediode ($D_N$) verbunden ist, wobei die Kathode der ersten Ladediode ($D_N$) betriebsmäßig mit dem ersten Stromleiter (110) verbunden ist; und die zweite Ladeschaltung einen zweiten Ladewiderstand ($R_P$) umfaßt, der in Serie mit einer zweiten Ladediode ($D_P$) verbunden ist, wobei die Kathode der zweiten Ladediode ($D_P$) betriebsmäßig mit dem Tor des siliziumgesteuerten Gleichrichters (SCR) verbunden ist.

8. Vorrichtung nach Anspruch 5, wobei die erste Ladeschaltung und die erste Diode innerhalb des elektrischen Gerätes angeordnet sind.

9. Vorrichtung nach einem der vorangehenden Ansprüche, wobei das elektrische Gerät ein Haartrockner ist.

10. Vorrichtung nach einem der vorangehenden Ansprüche, die ferner eine Testschaltung umfaßt, die betriebsmäßig zwischen den ersten und den zweiten Schockgefahr-Erfassungsleiter geschaltet ist und einen Widerstand in Serie mit einem normal offenen Schalter umfaßt.

11. Vorrichtung nach Anspruch 6, wobei die zweite Diode ($D_2$) eine lichtemitierende Diode umfaßt.

12. Vorrichtung nach einem der vorangehenden Ansprüche, wobei einer der Schockgefahr-Erfassungsleiter ein elektrisch leitendes Gehäuse für das Gerät umfaßt.

13. Vorrichtung nach Anspruch 12, wobei das elektrische Gerät ein Elektrowerkzeug ist.

14. Vorrichtung nach Anspruch 7, wobei der Wert des zweiten Ladewiderstandes ($R_P$) mindestens zehnmal der Wert des ersten Ladewiderstandes ($R_N$) ist.

15. Vorrichtung nach Anspruch 9, wobei einer der Schockgefahr-Erfassungsleiter ein Heizelement für den Haartrockner umfaßt.

**Revendications**

1. Appareil électrique dans lequel un dispositif électrique tenu à la main (12) est destiné à la connexion sur une source de courant alternatif par un dispositif de connexion (14) comprenant des premier (110) et second (120) conducteurs de puissance et une fiche (16); et un dispositif de prévention de risque d'électrocution (10) comprenant: une paire de conducteurs de détection de risques d'électrocution (210, 220) logés dans le dispositif (12) pour détecter un état de risque d'électrocution lié à l'eau à l'intérieur de l'appareil, les conducteurs (210, 220) comportant des extrémités respectives non connectées en relation espacée entre elles; un dispositif de commande (300) logé à l'intérieur de la fiche (16) et passant d'un premier état à un second état en réponse à la détection d'un état de risque d'électrocution lié à l'eau à l'intérieur de l'appareil (12), et un dispositif de commutation (S1, S2) logé à l'intérieur de la fiche (16) et sensible à un passage de courant à travers un organe d'actionnement (L) destiné à déconnecter de façon opérante la source de courant alternatif de l'appareil (12) en réponse au passage du dispositif de commande (300) de son premier état à son second état, caractérisé en ce qu'un premier (210) des conducteurs de détection (210, 220) est connecté au premier conducteur de puissance (110), le second conducteur de détection (220) est connecté à un troisième conducteur électrique (130) dans le dispositif de connexion (14) et le dispositif de commande (300) comprend un dispositif de commutation électronique à gâchette (SCR) connecté aux bornes des premier et second conducteurs de puissance (110, 120) en série avec l'organe d'actionnement (L) pour le dispositif de commutation (S1, S2), le troisième conducteur électrique (130) étant connecté à la gâchette du dispositif de commutation électronique (SCR), l'immersion dans l'eau des extrémités non connectées des conducteurs de détection (210, 220) fournissant une voie électriquement conductrice entre les conducteurs de détection pour connecter le second conducteur de puissance à la gâchette du dispositif de commutation électronique (SCR), la commutation résultante du dispositif (SCR) d'un état normalement non conducteur à un état conducteur de condition de risque d'éelctrocution assurant un passage pour le courant à travers l'organe d'actionnement (L) de sorte que les dispositifs de commutation (S1, S2) sont ouverts pour déconnecter la source de courant alternatif de l'appareil.

2. Appareil selon la revendication 1, dans lequel l'organe d'actionnement comprend une bobine d'excitation (L) et le dispositif de commutation comprend des premier et second commutateurs (S1, S2) sensibles au passage de courant à travers la bobine d'excitation (L), le premier commutateur (S1) pouvant être actionné entre une position normalement fermée et une position ouverte de risque d'électrocution et étant connecté en ligne avec le premier conducteur de puissance (110), et le second commutateur (S2) pouvant être actionné entre une position normalement fermée et une position ouverte de risque d'électrocution et étant connecté en ligne avec le second conducteur de puissance (120).

3. Appareil selon la revendication 2, dans lequel le dispositif de commutation électronique comprend un redresseur au silicium commandé (SCR) et dans lequel une première résistance (R1) est connectée en série entre la gâchette du redresseur au silicium commandé (SCR) et le troisième conducteur électrique (130), la cathode du redresseur au silicium commandé (SCR) étant connectée au second conducteur de puissance (120), l'anode du redresseur au silicium commandé (SCR) étant connectée à une extrémité de la bobine d'excitation (L) et l'autre extrémité de la bobine d'excitation (L) étant connectée au premier conducteur de puissance (110).

4. Appareil selon la revendication 3, comprenant de plus un circuit de diode (D) connecté entre la gâchette et la cathode du redresseur commandé au silicium.

5. Appareil selon la revendication 4, comprenant de plus: une capacité de chargement (C) connectée entre la gâchette et la cathode du redresseur au silicium commandé (SCR); un premier circuit de chargement ($R_N$, $D_N$) connecté entre le premier conducteur électrique (110) et le troisième conducteur électrique (130); un second circuit de chargement ($R_P$, $D_P$) connecté entre le premier conducteur de puissance (110) et la gâchette du redresseur commandé au silicium (SCR); et une première diode ($D_1$) connectée en série entre le second conducteur de détection de risque d'électrocution (220) et le troisième conducteur électrique (130).

6. Appareil selon la revendication 5, dans lequel le circuit de diode comprend une diode Zener (Z) connectée en série avec une seconde diode ($D_2$), l'anode de la diode Zener (Z) étant connectée de façon opérante à la gâchette du redresseur commandé au silicium (SCR) et l'anode de la seconde diode ($D_2$) étant connec-

tée de façon opérante à la cathode du redresseur commandé au silicium (SCR).

7. Appareil selon la revendication 6, dans lequel le premier circuit de chargement comprend une première résistance de chargement ($R_N$) connectée en série avec une première diode de chargement ($D_N$), la cathode de la première diode de chargement ($D_N$) étant connectée de façon opérante au premier conducteur de puissance (110); et le second circuit de chargement comprend une seconde résistance de chargement ($R_P$) connectée en série avec une seconde diode de chargement ($D_P$), la cathode de la seconde diode de chargement ($D_P$) étant connectée de façon opérante à la gâchette du redresseur commandé au silicium (SCR).

8. Appareil selon la revendication 5, dans lequel le premier circuit de chargement et la première diode sont logés à l'intérieur de l'appareil électrique.

9. Appareil selon l'une quelconque des revendications précédentes, dans lequel l'appareil électrique est un sèche-cheveux.

10. Appareil selon l'une quelconque des revendications précédentes, comprenant de plus un circuit de test connecté de façon opérante entre les premier et second conducteurs de détection de risque d'électrocution et comprenant une résistance montée en série avec un contact normalement ouvert.

11. Appareil selon la revendication 6, dans lequel la seconde des deux diodes comprend une diode électroluminescente.

12. Appareil selon l'une quelconque des revendications précédentes, dans lequel l'un des conducteurs de détection de risque d'électrocution comprend un logement conducteur électriquement pour l'appareil.

13. Appareil selon la revendication 12, dans lequel l'appareil est un outil électrique.

14. Appareil selon la revendication 7, dans lequel la valeur de la seconde résistance de chargement ($R_P$) est égale à au moins 10 fois la valeur de la première résistance de chargement ($R_N$).

15. Appareil selon la revendication 9, dans lequel l'un des conducteurs de détection de risques d'électrocution comprend un élément de chauffage du sèche-cheveux.

FIG. 1

*FIG.2*

SOURCE

*400*

LOAD

*200*

110

120

300

130

---

*400*

FIG.3

SOURCE

φ    S1

N    S2

L

110

120

130

LOAD

210

220

SCR    R₁

R₂    C    D

300

---

FIG.4

*400*

φ    S1

SOURCE

N    S2

L

110

130

120

LOAD

DN

RN    210

D₁

220

RP    R₁

DP

SCR

C    Z    D₂

300

FIG.5

EP 0 164 407 B1

3

FIG.7

FIG.6

FIG.8

RESET

FIG.9

FIG.10

FIG.11

FIG. 12